(19) Europäisches Patentamt
European Patent Office
Office européen des brevets

(11) EP 2 538 183 A2

(12) **EUROPEAN PATENT APPLICATION**

(43) Date of publication:
26.12.2012 Bulletin 2012/52

(51) Int Cl.:
*G01H 1/00* (2006.01)

(21) Application number: 12172489.2

(22) Date of filing: 18.06.2012

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 22.06.2011 US 201113166098

(71) Applicant: Honeywell International Inc.
Morristown, NJ 07962-2245 (US)

(72) Inventor: Kar, Chinmaya
Morristown, NJ 07962-2245 (US)

(74) Representative: Houghton, Mark Phillip
Patent Outsourcing Limited
1 King Street
Bakewell, Derbyshire DE45 1DZ (GB)

(54) **Vibration severity analysis apparatus and method for rotating machinery**

(57) Method of analysing severity of vibrations in rotating machines, including the steps of obtaining (602) a baseline vibration level of a machine (104) and normalizing (604) the baseline vibration level with a specified threshold value (108) to generate a normalized baseline vibration level. The specified threshold value is based on a type of the machine. The method also includes obtaining a measurement of an operational vibration level of the machine during its operation, normalizing (616) the measured operational vibration level against the normalized baseline vibration level, and identifying (624) at least indicator of a status of the machine based on the normalized operational vibration level.

FIG. 1

EP 2 538 183 A2

**Description**

TECHNICAL FIELD

This disclosure relates generally to control systems. More specifically, this disclosure relates to a vibration severity analysis apparatus and method for rotating machinery.

BACKGROUND

Machinery that performs some type of physical work typically generates physical vibrations as a function of its operation. For example, an electric motor can generate vibrations due to small levels of imbalance of its shaft, misalignment of its shaft relative to its load, or excessive bearing clearance caused by wear. Even radial variations of the motor's armature relative to the field windings of the motor can be generated. In many cases, a motor or other rotating machinery may be expected to generate certain levels of vibrations during its normal operation. However, increased vibration levels can be experienced for various reasons, such as failure or wear of one or more of its components caused by prolonged use.

Conventional techniques for monitoring the health of rotating machines have included vibration monitoring, acoustic or noise signature analysis, motor current signature analysis, and oil analysis. However, machines may function significantly different from one another, even those having the same make, model number, and time of manufacture. This may be due to a number of factors, such as manufacturing, installation, or measurement errors and differences in operating conditions. As a result, conventional techniques for monitoring the health of rotating machines have generally been inadequate.

SUMMARY

This disclosure provides a vibration severity analysis apparatus and method for rotating machinery.

In a first embodiment, a method includes obtaining a baseline vibration level of a machine and normalizing the baseline vibration level with a specified threshold value to generate a normalized baseline vibration level. The specified threshold value is based on a type of the machine. The method also includes obtaining a measurement of an operational vibration level of the machine during its operation, normalizing the measured operational vibration level against the normalized baseline vibration level, and identifying at least indicator of a status of the machine based on the normalized operational vibration level.

In a second embodiment, an apparatus includes at least one memory unit configured to store one or more threshold values, each associated with a specified machine type. The apparatus also includes at least one processing unit configured to obtain a baseline vibration level of a machine and normalize the baseline vibration level with a specified one of the one or more threshold values to generate a normalized baseline vibration level. The specified threshold value is based on the machine type of the machine. The at least one processing unit is also configured to obtain a measurement of an operational vibration level of the machine during its operation, normalize the measured operational vibration level against the normalized baseline vibration level, and identify at least indicator of a status of the machine based on the normalized operational vibration level.

In a third embodiment, a computer readable medium embodies a computer program. The computer program includes computer readable program code for obtaining a baseline vibration level of a machine and normalizing the baseline vibration level with a specified threshold value to generate a normalized baseline vibration level. The specified threshold value is based on a type of the machine. The computer program also includes computer readable program code for obtaining a measurement of an operational vibration level of the machine during its operation, normalizing the measured operational vibration level against the normalized baseline vibration level, and identifying at least indicator of a status of the machine based on the normalized operational vibration level.

Other technical features may be readily apparent to one skilled in the art from the following figures, descriptions, and claims.

BRIEF DESCRIPTION OF THE DRAWINGS

For a more complete understanding of this disclosure and its features, reference is now made to the following description, taken in conjunction with the accompanying drawings, in which:

FIGURE 1 illustrates an example vibration severity analysis system according to this disclosure;

FIGURE 2 illustrates example threshold values used by a vibration severity analyzer to normalize vibrational signatures according to this disclosure;

FIGURE 3 illustrates example root-mean-squared (RMS) values of a fan analyzed by a vibration severity analyzer according to this disclosure;

FIGURE 4 illustrates an example relationship between overall RMS values that have been normalized and overall RMS values that have not been normalized according to this disclosure;

FIGURES 5A and 5B illustrate example non-normalized and normalized curves of vibrational signatures obtained by a vibration severity analyzer according to this disclosure;

FIGURE 6 illustrates an example method for analyzing physical vibrations according to this disclosure; and

FIGURES 7A and 7B illustrate example normalized and non-normalized curves of vibrational signatures obtained by a vibration severity analyzer according to this disclosure.

DETAILED DESCRIPTION

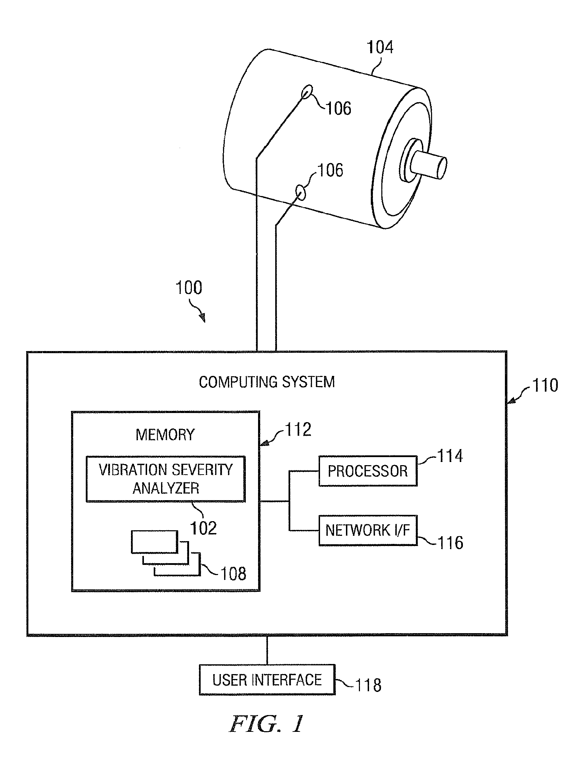

FIGURES 1 through 7B, discussed below, and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

FIGURE 1 illustrates an example vibration severity analysis system 100 according to this disclosure. As shown in FIGURE 1, the system 100 includes a vibration severity analyzer 102, which analyzes physical vibrations generated by one or more machines 104 during their operation. For example, the analyzer 102 may receive signals from one or more vibration transducers 106 physically coupled to or otherwise associated with the machine 104. The analyzer 102 analyzes the received signals to determine the health or operational status of the machine 104. The analyzer 102 may generate a baseline vibration signature of the machine 104 at an initial point in time and then normalize the measured baseline vibration level using a specified threshold value 108. Later on during operation of the machine 104, the analyzer 102 may receive additional measurements of the vibration level of the machine 104 and normalize the vibration signature using the normalized baseline vibration level. The resulting signal can then be used for analysis of the machine 104.

Vibration levels of the machine 104 may be measured to determine the condition or health of the machine 104. However, conventional analysis of vibration levels generated by machines may be relatively complex. For example, a machine may include numerous components, each of which may contribute a small portion of the overall vibration level generated by the machine during its operation. Thus, although a particular component may be critical to the operation of the machine, a fault in this particular component may contribute a relatively small portion of the overall vibration level generated by the machine. As another example, a machine's vibrational signature may vary significantly according to various factors external to the machine itself, such as the environment in which the machine is operating, the type of load driven by the machine, or the source of power driving the machine.

The complexity of vibration analysis may be eased somewhat by performing a vibration measurement during initial startup of the machine 104 to derive a baseline vibration signature of the machine. In this manner, subsequent vibration measurements may be taken during the serviceable life of the machine 104. The subsequent vibration measurements can be compared with the baseline vibration signature to determine if any significant changes have occurred. Nevertheless, this technique has its shortcomings in that the baseline vibration levels of similar machines may vary greatly among each other, even among those machines having the same make, model number, and time of manufacture. This may be due to a number of factors, such as manufacturing, installation, or measurement errors and differences in operating conditions. As a result, conventional techniques for monitoring the health of rotating machines have generally been inadequate. Thus, vibration analysis of machines based upon their associated baseline vibration signals may still yield inconsistent results.

In accordance with this disclosure, the analyzer 102 normalizes the baseline vibration levels of a machine 104 against a specified threshold value 108, such as an established standard value. Later on during operation of the machine, these normalized baseline vibration levels may be used to normalize measured vibration levels of the machine to provide enhanced analysis of the health of the machine. This can help to mitigate relatively large variations in vibration levels that may be encountered across different machines 104 of the same or similar type.

The machine 104 represents any device for which a vibrational analysis may be desired. Examples of the machine 104 may include electric or gas motors, fans, pumps, generators, impellers, or any other device that may generate physical vibrations during its operation. The machine 104 may include multiple components that function together to provide a function provided by the machine 104. For instance, an electric motor may include a shaft on which an armature is mounted, a housing for containing one or more field windings, and bearings that maintain the shaft in a relatively fixed position relative the housing. Each of these components may generate its own individual vibrational signature during operation. Thus, for each machine 104 analyzed by the analyzer 102, membership functions or other functions may be generated to at least partially isolate vibrational energy for each component in order to analyze the health of the machine 104 on a sub-system basis.

Each of the vibration transducers 106 represents any type of device that converts vibrational energy into signals representing the vibrational energy. In some embodiments, the vibration transducers 106 may include one or more accelerometers that measure vibrational energy along one or more orthogonal directions. Accelerometers may include, for example, electro-magnetic or piezo-electric elements for converting vibrational energy into electrical signals.

The analyzer 102 includes any suitable structure for receiving vibration signals and analyzing the received vibration signals against one or more specified threshold values 108. For example, the analyzer 102 could be implemented using hardware only or a combination of hardware and software/firmware instructions. In this example, the analyzer 102 is implemented using a computing system 110 that includes at least one memory unit 112, at least one processing unit 114, and at least one network interface 116. The at least one memory unit 112 includes any suitable volatile and/or nonvolatile storage and retrieval device(s), such as a hard disk, an optical storage disc, RAM, or ROM. The at least one processing unit 114 includes any suitable processing structure(s), such as a microprocessor, microcontroller, digital signal processor, application specific integrated circuit, or field programmable gate array. The at least one network interface 116 includes any suitable structure(s) for communicating over one or more networks, such as a wired Ethernet interface or a wireless interface. This represents one specific way in which the analyzer 102 can be implemented, and other implementations of the analyzer 102 could be used. When implemented using software and/or firmware, the analyzer 102 may include any suitable program instructions that analyze vibrations of one or more machines 104.

A user interface 118 can be used to interact with the analyzer 102, such as to initiate analysis and view analysis results or alarms. The user interface 118 includes any suitable structure for providing information to a user and receiving information from the user. For example, the user interface 118 could represent a display device.

Although FIGURE 1 illustrates one example of a vibration severity analysis system 100, various changes may be made to FIGURE 1. For example, the system 100 could include any number of analyzers 102, machines 104, vibration transducers 106, threshold values 108, computing systems 110, and user interfaces 118. Also, the functional division shown in FIGURE 1 is for illustration only. Various components in FIGURE 1 could be combined, further subdivided, or omitted and additional components could be added according to particular needs. For instance, the computing system 110 could be integrated into the user interface 118. In addition, the machine 104 could have any suitable structure with any number and arrangement of other machines.

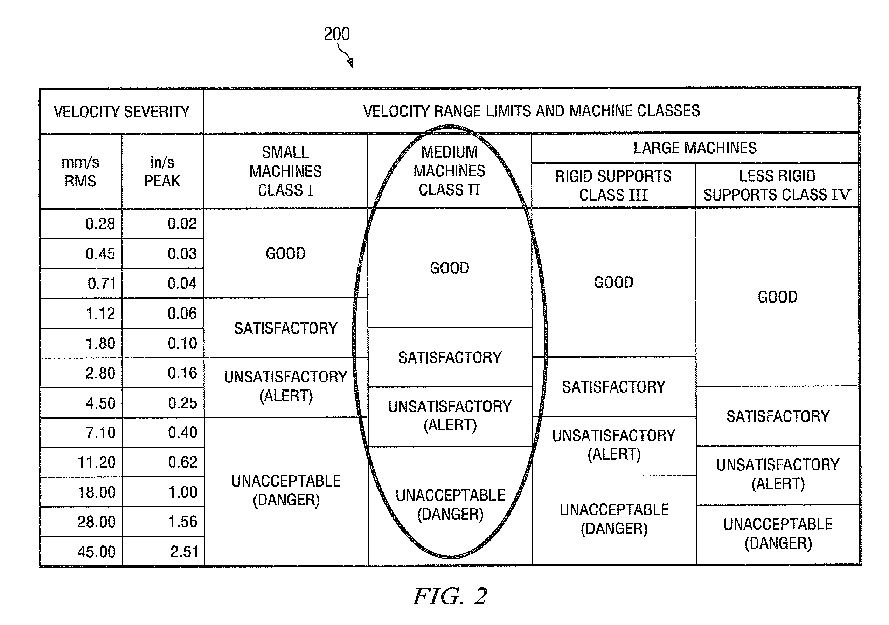

FIGURE 2 illustrates example threshold values used by a vibration severity analyzer to normalize vibrational signatures according to this disclosure. In particular, FIGURE 2 illustrates a chart 200 showing several specified threshold values that may be used by the analyzer 102 of FIGURE 1 to normalize vibrational signatures. The chart 200 indicates specified threshold values determined according to the International Organization for Standardization (ISO) 10816 specification. This specification establishes the general conditions and procedures for measurement and evaluation of vibrations using measurements made on non-moving (static) parts of machines. This specification also provides general evaluation criteria related to both operational monitoring and acceptance testing established primarily with regard to securing reliable long-term operation of the machine. Although specified threshold values determined according to the ISO 10816 specification are described here, any specified threshold values may be used as determined in any suitable manner.

The specified threshold values of the ISO 10816 specification are categorized according to the type of machine being analyzed. In particular, the ISO 10816 specification specifies four different types of machines, namely small machines (Class I), medium machines (Class II), and large machines including those having rigid supports (Class III) and less rigid supports (Class IV). Within each type are several threshold values representing minimum levels of vibrational energy that may be exhibited by its respective type of machine to maintain a certain operational status level.

As shown in FIGURE 2, operational status levels may include good, satisfactory, unsatisfactory, and unacceptable operational status levels. For example, a medium-sized machine may operate satisfactorily if it generates less than 2.80 millimeters/second of root-mean-squared (RMS) vibrational energy or less than 0.16 inches/second peak vibrational energy. As another example, a medium-sized machine may operate unacceptably if it generates more than 7.10 millimeters/second of RMS vibrational energy or more than 0.40 inches/second peak vibrational energy. For purposes of this disclosure, the specified threshold values associated with the boundary between satisfactory and unsatisfactory levels are considered as the specified threshold value used by the analyzer 102.

Although FIGURE 2 illustrates examples of threshold values used by the vibration severity analyzer 102 to normalize vibrational signatures, various changes may be made to FIGURE 2. For example, any desired threshold values from any suitable sources may be used.

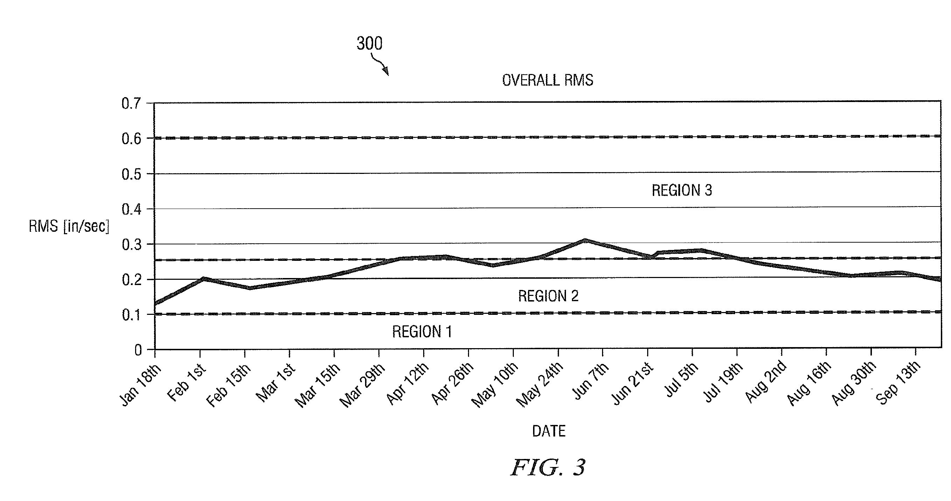

FIGURE 3 illustrates example root-mean-squared (RMS) values of a fan analyzed by a vibration severity analyzer according to this disclosure. In particular, FIGURE 3 illustrates an example graph 300 showing measured overall RMS values of a fan that may be computed by the system 100 of FIGURE 1. As shown here, the fan exhibits relatively high vibration (baseline vibration) at the earliest recorded date. The particular fan from which the overall RMS vibrational energy values are generated is a 50 horsepower (HP) fan, which according to the ISO 10816 specification is a medium-sized machine. As such, the graph 300 includes various regions indicating the estimated operational status levels for the fan. For example, region 1 indicates a satisfactory operational status of the fan in which vibrational energy levels are less than 0.11 RMS inches/second (corresponding to 2.80 millimeters/second) as shown in the ISO 10816 graph of FIGURE 2. Region 2 indicates an unsatisfactory operational status of the fan in which vibrational energy levels greater than region 1 and less than 0.28 RMS inches/second (corresponding to 7.10 millimeters/second) as shown in the ISO 10816 graph. Region 3 indicates an unacceptable operational status of the fan in which vibrational energy levels are greater than that of region 2.

The measured overall RMS values in FIGURE 3 span a nine-month period of time. As shown here, the initial recorded overall RMS value is approximately 0.13 inches/second, a value that lies within the unsatisfactory region 2 according to the specified threshold values established by the ISO 10816 specification. Thus, in spite of the fan being in a good known operational state, baseline RMS values initially obtained for the fan indicate that the fan is operating improperly.

According to the teachings of this disclosure, the initial baseline measurements may be normalized with a specified threshold value such that deviations may be compensated for in the initial baseline signature measurements. In some embodiments, the specified threshold value may be obtained from a specification issued by a standards organization, such as the ISO 10816 specification. For example, the baseline signature measurements may be normalized according to the formula:

$$ISOChartScaleFactor = \frac{OverallRMS_{BaselineSignal}}{ThresholdRMS_{ISOChart10816}}.$$

In other embodiments, the specified threshold value may be obtained from averaged values of baseline measurements of multiple machines having a type that is the same as or similar to the type of machine being analyzed. For example, given the 50HP fan described above, baseline vibration measurements from other fans having the same or similar capacity may be recorded and averaged together in order to derive a specified threshold value from which subsequent vibration measurements may be normalized. Any number of other fans may be used to determine an average specified threshold value. As a general rule, the level of precision may increase as the quantity of baseline vibration measurements correspondingly increases.

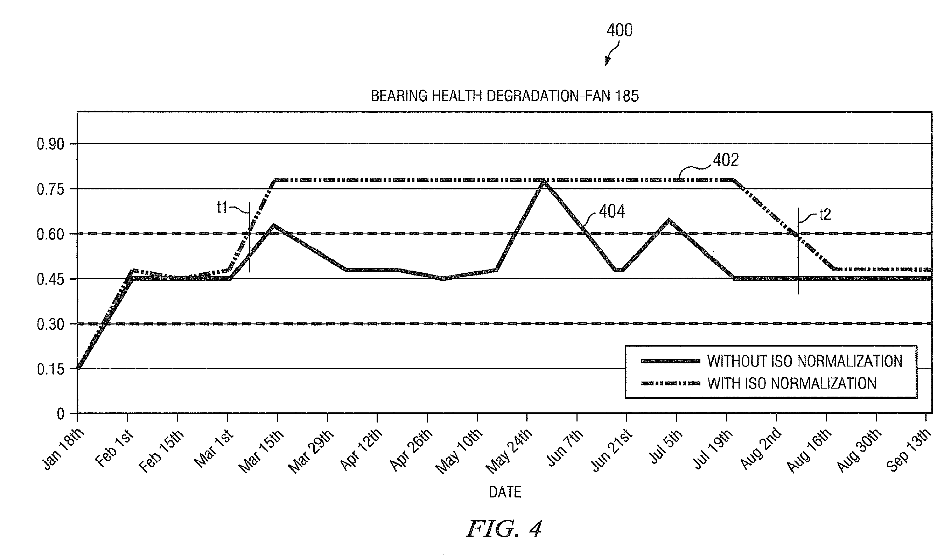

FIGURE 4 illustrates an example relationship between overall RMS values that have been normalized and overall RMS values that have not been normalized according to this disclosure. In particular, FIGURE 4 illustrates an example graph 400 showing the relationship between normalized overall RMS values and overall RMS values that have not been normalized for the fan described above. Curve 402 represents overall RMS values that have been normalized according to a specified threshold value specified according to a standards organization, such as the ISO 10816 specification. Curve 404 represents the same overall RMS values that have not been normalized.

In this example, the overall RMS values are normalized according to a specified threshold value defined in the ISO 10816 specification. In other embodiments, the specified threshold value may be obtained from any suitable standards organization or other suitable source of vibration characteristics data. For instance, the specified threshold value may be derived from averaged baseline signature values obtained from multiple other machines of the same type.

As can be seen in FIGURE 4, curve 402 may provide an enhanced indication of failures incurred by the machine. For example, although the machine (fan) continues to operate from time t1 to time t2, curve 402 shows that the machine is operating in the unsatisfactory operational status level as defined by the ISO 10816 specification. This heightened level of vibration may indicate that one or more components have partially failed or become excessively worn. Thus, although the machine continues to operate during this period of time, personnel could be provided with an early means of detecting the partial failure before further damage to the machine is caused.

Although FIGURE 3 illustrates example RMS values of a fan and FIGURE 4 illustrates an example relationship between normalized and non-normalized overall RMS values, various changes may be made to FIGURES 3 and 4. For example, although vibration measurements are recorded as overall RMS values, vibration measurements may be recorded in any form that is useful for comparison and analysis in conjunction with a specified threshold value. That is, if the specified threshold value is in the form of peak millimeter/second values, the analyzer 102 may use measured vibration signals in peak millimeter/second values.

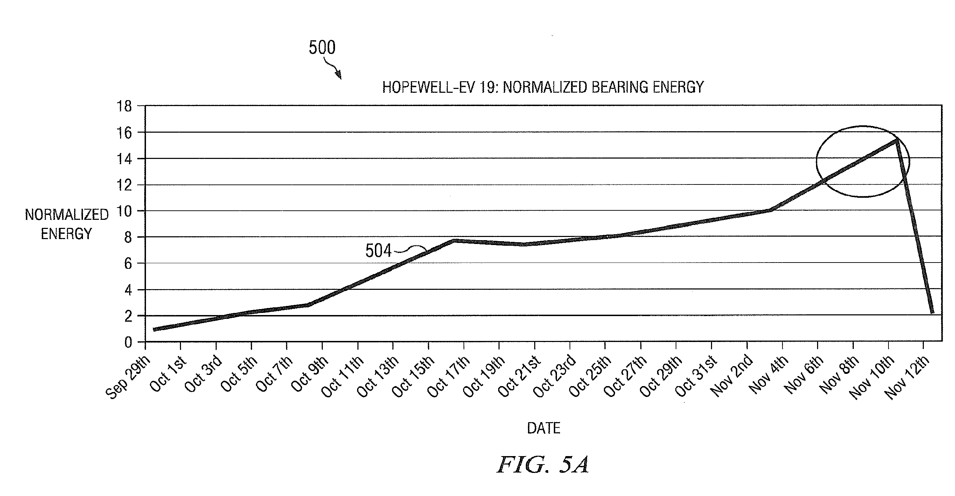

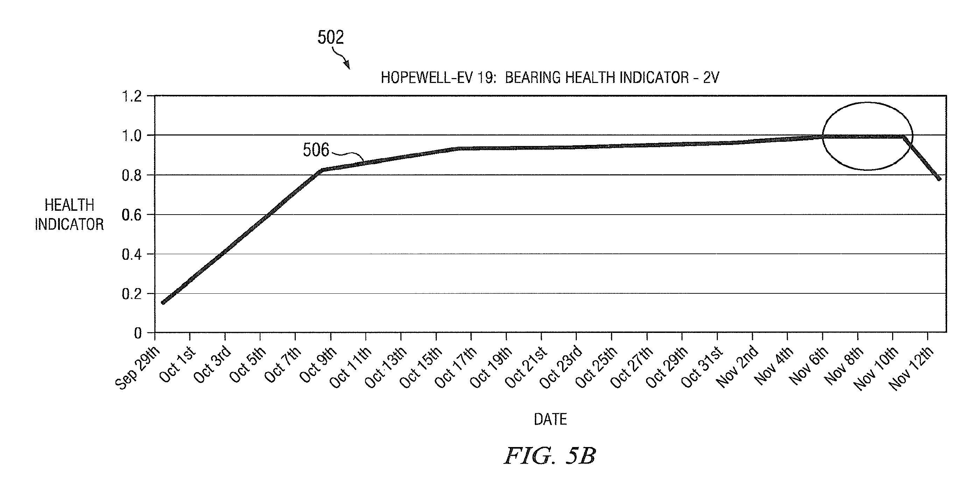

FIGURES 5A and 5B illustrate example non-normalized and normalized curves of vibrational signatures obtained by a vibration severity analyzer according to this disclosure. In particular, FIGURES 5A and 5B illustrate example graphs 500 and 502 showing a non-normalized curve 504 and a normalized curve 506, respectively. Non-normalized curve 504 and normalized curve 506 show the effects of normalization when a machine exhibits relatively low baseline vibration. Non-normalized curve 504 represents vibration signatures without normalization, while normalized curve 506 represents the vibration signatures with normalization.

These example graphs differ from the example graph of FIGURE 4 in that the initial baseline vibration signature value initially obtained is significantly less than the specified threshold value as specified in the ISO 10816 specification. As seen in the highlighted portion of curve 504, a relatively sharp increase in the vibration signature is caused by a bearing failure in the machine. However, another highlighted portion corresponding in time to the highlighted portion of curve 504 shows that the sharp increase is diminished somewhat due to normalization. Thus, normalization of vibration signatures with a specified threshold value may not be as of great a value as when the initial baseline vibration signature of the machine is relatively greater than the specified threshold value for that particular machine.

The graph 504 shows an energy increase by 1,300 percent, whereas the graph 506 shows that the health indicator (calculated from Fuzzy feature fusion with various membership functions of the energy) saturates after 300 percent increase in energy. Therefore, with low baseline value, the number of membership functions should be increased to have a gradual increase of health indicator and no normalization of baseline vibration signature is required (which is correctly shown in steps 612 and 618).

such that they exhibit a gradual increase of health indicators. As a result, in cases of relatively low initial baseline vibration signature values, no normalization of baseline vibration signature values may be required.

Thus, in some embodiments, the analyzer 102 may normalize subsequent vibration signal measurements if the initial baseline vibration signal measurement is relatively greater than the specified threshold value. The analyzer 102 may not normalize subsequent vibration signature measurements otherwise. That is, the analyzer 102 may compare the initial baseline vibration signal with the specified threshold value and normalize subsequent vibration signal measurements only if they exceed the specified threshold value.

Although FIGURES 5A and 5B illustrate one example of non-normalized and normalized curves of vibrational signatures obtained by the vibration severity analyzer 102, various changes may be made to FIGURES 5A and 5B. FIGURES 5A and 5B illustrate merely one example of energy and health indicators determined from vibration signatures of a machine that have been measured. That is, curve 506 represents non-normalized baseline vibration signal measurements that pertain to energy and associated health indicators of the machine. Thus, curve 506 merely represents the saturation of health indicators following a relatively low increase in energy. Other machines may show effects other than what is displayed here. The purpose of the non-normalized curve 504 and the normalized curve 506 is to show the saturation effects that may be caused by normalizing a set of vibration signature values against a baseline vibration signature significantly less than the threshold value.

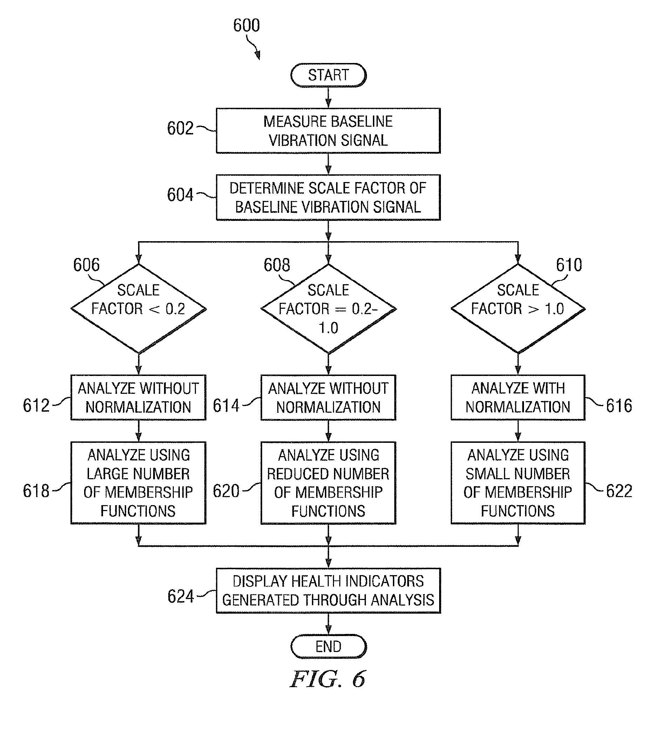

FIGURE 6 illustrates an example method 600 for analyzing physical vibrations according to this disclosure. As shown in FIGURE 6, the analyzer 102 measures an initial baseline vibration signal of a machine at step 602. This could include, for example, measuring an initial baseline signal of a machine 104 when it is newly installed. The initial baseline vibration signal may also be at some intermediate point during the machine's serviceable life. That is, the baseline vibration signal may be measured and recorded at any point in time where the machine 104 is in a functionally operable condition with no known defects or failures. Also, the initial baseline vibration signal may be measured following a maintenance operation performed on the machine 104 in which one or more components are replaced or one or more of the components are tuned or adjusted in some manner.

The analyzer 102 can optionally convert the measured baseline vibration signal to any form suitable for comparison with a specified threshold value (assuming conversion is needed). In particular embodiments in which the specified threshold value is obtained from the ISO 18016 specification, the analyzer 102 may convert the measured baseline vibration signal to an overall RMS value. The converted baseline vibration signal can then be stored in memory. The measured baseline vibration signal may be stored in any form that is similar to the selected specified threshold value.

The analyzer determines a scale factor of the stored baseline vibration signal to the specified threshold value at step 604. If the determined scale factor is less than 0.2 at step 606, processing continues at step 612. If the determined scale factor is greater than 0.2 and less than 1.0 at step 608, processing continues at step 614. If the determined scale factor is greater than 1.0 at step 610, processing continues at step 616. Although the steps 606, 608, and 610 describe threshold values of 0.2 and 1.0, any suitable threshold values may be used such that vibration analysis of the machine 104 is processed along different branches. In general, a threshold value of 0.2 generally refers to an example vibration level of a machine 104 that is lower than the selected specified threshold value, and a threshold value of 1.0 generally refers to an example vibration level of a machine 104 that is equal to or greater than the selected specified threshold value.

If processing is continued at step 612, the baseline vibration signal is less than the specified threshold value and thus is not normalized against the specified threshold value to analyze vibration levels of the machine 104. In practice, machines 104 having a relatively low baseline vibration signal may generate subsequent vibration signals that may increase up to 1200% or even more before exhibiting a failure. Thus, a failure in the machine 104 may be readily assessed using vibration analysis when the baseline vibration signal is relatively low compared to the threshold vibration value.

Analysis of the machine 104 may be conducted using a relatively large number of membership functions at the input (features) and the output (health indicators) of the machine at step 618. The features of the vibration signal associated with the machine can have a number of membership functions depending on the scale factor. If the scale factor is very less, slight increase in the features will make the calculated health indicator (506) saturated. A large number of membership functions of the feature (504) with progressive thresholds could have made this health indicator progressive. This saturation will confuse the user regarding the time when maintenance action is to be taken. If he takes maintenance action at the first instance of warning condition, then he will be unable to utilize the life of the machine or component. This is evident in Fig 506, where the machine was in alarm condition from 10/7/2008. Had maintenance action taken during that point of time, the user could have missed the 1 months of life of the bearing which eventually required maintenance in 11/8/2008".

Membership functions generally refer to characteristic functions that represent the likelihood or degree of membership of members of a set. In the field of Fuzzy set theory, membership functions may be used to identify the likelihood of a particular outcome based on certain Fuzzy rules. The analyzer 102 may use one or more membership functions that are associated with certain operational characteristics of the machine 104 and combine them using Fuzzy logic rules to determine health indicators for certain components of the machine. For example, the analyzer 102 may generate membership functions for components of a machine, such as its shaft or bearings, by "fuzzyfying" different aspects of a vibration signal and combining the "fuzzyfied" membership functions in a manner such that a health indicator probability is determined for each of the components.

The analyzer 102 may use membership functions provided to a set of features. For example, analysis of a shaft may be performed using energy at a normalized fundamental frequency (1X) of a shaft, one or more normalized harmonic (such as 2X, 3X, and 0.5X) energy values of the fundamental frequency of a shaft, normalized looseness, and/or normalized overall values obtained from the vibration signal. These membership functions are fused using a fuzzy model so as to get the health indicator. If there is no membership function, then there will be crisp decision like there is defect or no defect. But, a number of membership functions of features in the fuzzy model allows us to get a progressive /gradual health indicator showing the actual degradation status.

In certain cases, addition of new membership functions may help in obtaining a gradual increase of health indicators of the machine with time, rather than health indicators that exhibit sharp increases initially and become saturated after an extended period of use. This saturation may confuse users as to when maintenance action is needed. In such a case, maintenance that may be performed at the first instance of elevated health indicators representing a warning condition may interrupt the continuity of vibration monitoring over the life of the machine. This particular case is exemplified in FIGURE 5B, where the machine was shown to be in an alarm condition for a relatively long period of time. Had maintenance action been performed immediately following onset of the relatively high vibration level, users could have potentially missed a significant portion of health indicator information of the bearing that could eventually require maintenance.

In some embodiments, analysis of the machine 104 may be conducted using an overall vibration level. Analysis of the machine 104 may therefore also include comparing the derived overall vibration level with that provided by the ISO 10816 specification or some other value. Also, analysis of the machine 104 may be conducted using a Fuzzy model in which analysis of the overall vibration level may be performed in conjunction with one or more membership functions as described above.

In general, vibration analysis using an overall vibration level may provide system-level information. Thus, inclusion of this in the Fuzzy models of one or more sub-systems may make its use redundant. Moreover, the addition of one more variables in the input list of each sub-system may make the Fuzzy model relatively more complex. Cases exist where the overall RMS level is under the satisfactory region of the ISO 10816 specification and yet a machine fails. The reason may be attributed to vibrational energy generated by the machine that is contributed by one or a few sub-systems of the machine. If the vibrational energy in any sub-system doubles, its contribution may still be negligible with respect to the overall vibrational energy generated by the machine. In this case, the increased vibrational energy may not be noticed in the overall vibration level. As a result, analysis using the Fuzzy model may reveal failures of certain sub-systems as well as the overall health of the machine.

If processing is continued at step 614, the baseline vibration signal is approximately close to the specified threshold value and thus may not be normalized against the specified threshold value to analyze vibration levels of the machine during its serviceable life. Rather, the analyzer 102 may use known vibration analysis techniques to analyze the health of the machine 104. That is, due to potential saturation of certain health indicators, vibration signals may not be normalized against the specified threshold value if the baseline vibration signal is approximately close to the selected specified threshold value.

At step 620, the analyzer 102 may analyze vibration levels using a reduced number of membership functions relative to the number of membership functions used in step 618. In some cases, a machine having this baseline vibration signal can manage a relatively large increase in energy in each of its sub-systems. However, there is a chance that the vibrational energy increase may be more as shown and described above with respect to FIGURES 5A and 5B. In some embodiments, analysis of the machine 104 may be conducted using an overall vibration level and combined with other membership functions as described above with respect to step 618.

If processing is continued at step 616, the baseline vibration signal is greater than the specified threshold value and thus is normalized against the specified threshold value. Later on during operation of the machine, vibration analysis of the machine 104 could be performed in a manner such as that described above with respect to FIGURE 4 in which the received vibration signal may be normalized against the normalized baseline vibration signal. In other embodiments, vibration analysis of the machine 104 may be performed in which the received vibration signal may be normalized against an averaged baseline vibration signal obtained from multiple other machines of the same or similar type.

At step 622, the analyzer 102 may analyze the normalized vibration signals using relatively few membership functions. This may be due to the relatively large overall vibration levels present in the machine 104 that would act as noise to conceal information that would otherwise be detected, with certain signals indicative of those processed by the membership functions. In other words, the thresholds of the membership functions may be reduced relative to those that may be performed at step 616 so that progression can be tracked. Otherwise, the machine 104 or its associated sub-systems may fail even during warning stages of health indicators provided by conventional vibrational analysis techniques.

The analyzer 102 may then provide the determined health indicators to a user at step 624. The health indicators can refer to values attributed to certain membership functions associated with the vibration signal. In an example where the machine 104 represents a motor, one health indicator may be associated with a particular set of harmonics of the fundamental rotational speed of the motor, which may indicate the health of its shaft bearings. In some embodiments, the health indicators may be displayed on the user interface 118 for use by a user. In other embodiments, the analyzer 102 may compare the determined health indicators with one or more alarm thresholds and issue an alarm if a health indicator exceeds its associated alarm threshold. The threshold values provided in the ISO 10816 chart may be used as a basis for issuing an alarm to a user even if certain individual sub-system health indicators have large values. In other words, the threshold values of the ISO 10816 chart may become super-variables in which an alarm is provided on the basis of the ISO 10816 chart.

In some embodiments, the baseline vibration signal or its calculated features may be averaged using one or more relatively large data sets before being considered as baseline features. This may be particularly useful for certain baseline features with low values relative to a specified threshold value. Thus, the analyzer 102 may be configured to selectively activate an option in which vibration signals are averaged over several acquisition cycles (such as approximately 20 cycles). This averaging technique may be beneficial in that it may be implemented in the analyzer 102 without undue modification of the analyzer's underlying functionality.

Although FIGURE 6 illustrates one example of a method 600 for analyzing physical vibrations, various changes may be made to FIGURE 6. For example, while shown as a series of steps, various steps in FIGURE 6 could overlap, occur in parallel, occur in a different order, or occur multiple times.

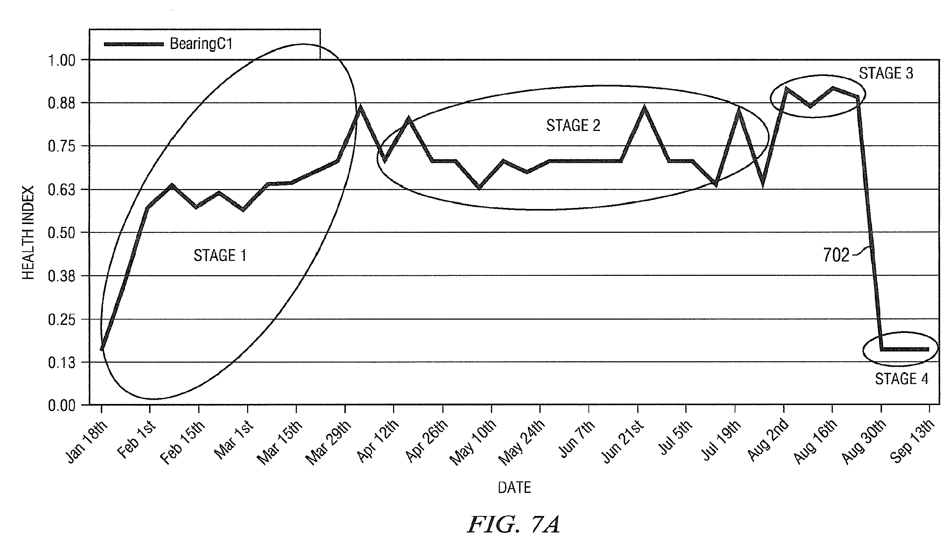

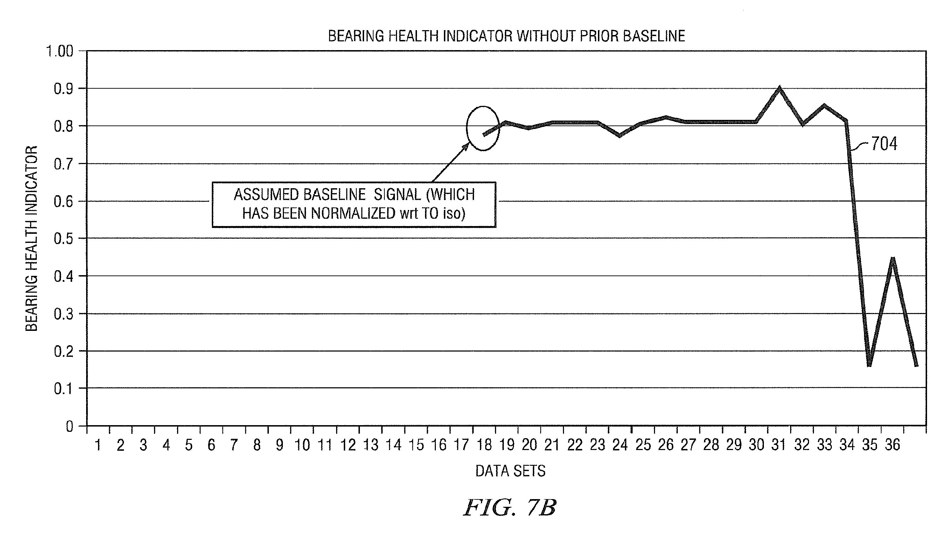

FIGURES 7A and 7B illustrate example curves of vibrational signatures showing good and excessive baseline vibration levels, respectively, obtained by a vibration severity analyzer according to this disclosure. In particular, FIGURES 7A and 7B illustrate example curves 702 and 704 showing a curve 702 showing relatively normal vibration levels and a curve 704 showing excessive vibration levels, respectively, representing a health indicator of a bearing. Curve 702 and curve 704 show the effects of normalization according to different initial vibration levels taken from two different machines. Curves 702 and 704 show the effects of normalization according to different initial vibration levels taken from two different machines. Curve 702 represents baseline vibration levels generated by a machine that is within the vibration limits specified by the ISO 10816 specification, while curve 704 represents another machine exhibiting relatively bad baseline vibration levels relative to the ISO 10816 specification.

In the case of curve 702, a stage 1 portion shows a gradual increase in the fault progression of the bearing with time. A stage 2 portion of curve 702 shows that the health indicator is saturated. A stage 3 portion of curve 702 shows that the health indicator has progressed beyond that shown in stage 2. Following the stage 3 portion, a maintenance operation is performed such that further operation shows the health indicator having a relatively low value at a stage 4 portion of curve 702.

As mentioned above, curve 704 a represents a machine having relatively bad vibration levels. In this particular case, the machine has been in use for a period of time prior to analysis by the vibration severity analyzer. Thus, initial vibration signals obtained at dataset (18) may be used to normalize ensuing measurements of vibration signals from the machine. However, the baseline vibration level could be normalized with respect to ISO 10816 or any fleet level threshold so that the subsequent calculated health indicator will reflect the actual condition of the machine. Thus, use of normalized initial or baseline vibration signals may be used to normalize the remaining portion of curve 704 to show the health indicator represented by curve 704 to be bad.

Although FIGURES 7A and 7B illustrate examples curves of vibrational signatures obtained by the vibration severity analyzer 102, various changes may be made to FIGURES 7A and 7B. FIGURES 7A and 7B illustrate merely two examples of health indicators determined from vibration signatures of several machines that have been measured. Other machines may show effects other than what is displayed here. The purpose of the curves 702 and 704 is to show the benefit that may be provided by selectively normalizing vibration signals according to different levels of vibrational energy relative to a specified value, such as those provided in the ISO 10816 specification.

In some embodiments, various functions described above are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory.

It may be advantageous to set forth definitions of certain words and phrases used throughout this patent document. The terms "include" and "comprise," as well as derivatives thereof, mean inclusion without limitation. The term "or" is inclusive, meaning and/or. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

**Claims**

1. A method comprising:

   obtaining (602) a baseline vibration level of a machine (104);
   normalizing (604) the baseline vibration level with a specified threshold value (108) to generate a normalized baseline vibration level, the specified threshold value based on a type of the machine;
   obtaining a measurement of an operational vibration level of the machine during its operation;
   normalizing (616) the measured operational vibration level against the normalized baseline vibration level; and
   identifying (624) at least indicator of a status of the machine based on the normalized operational vibration level.

2. The method of Claim 1, further comprising:

   obtaining the specified threshold value from an International Organization for Standardization (ISO) 10816 specification.

3. The method of Claim 1, further comprising:

   obtaining the specified threshold value from averaged baseline vibration levels obtained from multiple machines of a same type.

4. The method of Claim 1, wherein normalizing the baseline vibration level comprises normalizing the baseline vibration level with the specified threshold value only if the baseline vibration level exceeds the specified threshold value by a specified amount.

5. The method of Claim 1, wherein identifying the at least indicator comprises identifying the at least one indicator using a specified quantity of membership functions that are selected according to a relative magnitude of the baseline vibration level and the specified threshold value.

6. An apparatus comprising:

   at least one memory unit (112) configured to store one or more threshold values (108), each threshold value associated with a specified machine type; and
   at least one processing unit (114) configured to:

   obtain a baseline vibration level of a machine (104);
   normalize the baseline vibration level with a specified one of the one or more threshold values to generate a normalized baseline vibration level, the specified threshold value based on the machine type of the machine;
   obtain a measurement of an operational vibration level of the machine during its operation;
   normalize the measured operational vibration level against the normalized baseline vibration level; and
   identify at least indicator of a status of the machine based on the normalized operational vibration level.

7. The apparatus of Claim 6, wherein the at least one processing unit is configured to normalize the baseline vibration level with the specified threshold value only if the baseline vibration level exceeds the specified threshold value by a specified amount.

8. The apparatus of Claim 6, wherein the at least one processing unit is operable to obtain the baseline vibration level by averaging multiple initial baseline vibration levels with one another.

9. The apparatus of Claim 6, wherein the at least one processing unit is operable to measure the baseline vibration level when the machine is in a known good state.

10. The apparatus of Claim 6, wherein the at least one processing unit is operable to measure the baseline vibration level after a maintenance procedure is performed on the machine.

11. A computer readable medium embodying a computer program, the computer program comprising computer readable program code for:

obtaining (602) a baseline vibration level of a machine (104);
normalizing (604) the baseline vibration level with a specified threshold value (108) to generate a normalized baseline vibration level, the specified threshold value based on a type of the machine;
obtaining a measurement of an operational vibration level of the machine during its operation;
normalizing (616) the measured operational vibration level against the normalized baseline vibration level; and
identifying (624) at least indicator of a status of the machine based on the normalized operational vibration level.

FIG. 1

200

| VELOCITY SEVERITY | | VELOCITY RANGE LIMITS AND MACHINE CLASSES | | | |
|---|---|---|---|---|---|
| mm/s RMS | in/s PEAK | SMALL MACHINES CLASS I | MEDIUM MACHINES CLASS II | LARGE MACHINES | |
| | | | | RIGID SUPPORTS CLASS III | LESS RIGID SUPPORTS CLASS IV |
| 0.28 | 0.02 | GOOD | GOOD | GOOD | GOOD |
| 0.45 | 0.03 | GOOD | GOOD | GOOD | GOOD |
| 0.71 | 0.04 | GOOD | GOOD | GOOD | GOOD |
| 1.12 | 0.06 | SATISFACTORY | GOOD | GOOD | GOOD |
| 1.80 | 0.10 | SATISFACTORY | SATISFACTORY | GOOD | GOOD |
| 2.80 | 0.16 | UNSATISFACTORY (ALERT) | SATISFACTORY | SATISFACTORY | GOOD |
| 4.50 | 0.25 | UNSATISFACTORY (ALERT) | UNSATISFACTORY (ALERT) | SATISFACTORY | SATISFACTORY |
| 7.10 | 0.40 | UNACCEPTABLE (DANGER) | UNSATISFACTORY (ALERT) | UNSATISFACTORY (ALERT) | SATISFACTORY |
| 11.20 | 0.62 | UNACCEPTABLE (DANGER) | UNSATISFACTORY (ALERT) | UNSATISFACTORY (ALERT) | UNSATISFACTORY (ALERT) |
| 18.00 | 1.00 | UNACCEPTABLE (DANGER) | UNACCEPTABLE (DANGER) | UNACCEPTABLE (DANGER) | UNSATISFACTORY (ALERT) |
| 28.00 | 1.56 | UNACCEPTABLE (DANGER) | UNACCEPTABLE (DANGER) | UNACCEPTABLE (DANGER) | UNACCEPTABLE (DANGER) |
| 45.00 | 2.51 | UNACCEPTABLE (DANGER) | UNACCEPTABLE (DANGER) | UNACCEPTABLE (DANGER) | UNACCEPTABLE (DANGER) |

*FIG. 2*

FIG. 3

EP 2 538 183 A2

FIG. 4

EP 2 538 183 A2

500

HOPEWELL-EV 19: NORMALIZED BEARING ENERGY

NORMALIZED ENERGY

504

DATE

**FIG. 5A**

502

HOPEWELL-EV 19:  BEARING HEALTH INDICATOR - 2V

*FIG. 5B*

*FIG. 6*

*FIG. 7A*

FIG. 7B